# EUROPEAN PATENT SPECIFICATION

(11) **EP 3 428 547 B1**
(45) Date of publication and mention of the grant of the patent: **20.05.2020**
(21) Application number: 18178144.4
(22) Date of filing: 15.06.2018
(51) Int. Cl.: F24D 19/10, G05D 23/19, G05D 7/06, F24D 10/00

(54) **HEATING SYSTEM**
HEIZSYSTEM
SYSTÈME DE CHAUFFAGE

(30) Priority: 10.07.2017 DK PA201700406
(43) Date of publication of application: 16.01.2019
(73) Proprietor: Danfoss A/S, 6430 Nordborg (DK)
(72) Inventor: OSOJNIK, Matjaz, 6430 Nordborg (DK); KJELDSTEEN, Peter Skov, 6430 Nordborg (DK); KELLY, John, 6430 Nordborg (DK)
(74) Representative: Petersen, Frank

(56) References cited:
- EP-A1- 3 012 705
- WO-A1-03/065141
- WO-A1-2004/107075
- WO-A2-2011/154003

## Description

The present invention relates to a residential heating system comprising a heat exchanger having a primary side and a secondary side, wherein the primary side is connected to a heat source and the secondary side is connected to a heating arrangement, the heating arrangement comprising plural branches, each branch having a heat exchanging device.

Heat supplied by the heat source is transferred to a heat carrying fluid on the secondary side of the heat exchanger. The heat transferring fluid is used to transport the heat to the heat exchanging devices, for example radiators, floor heating units, etc., used, for example, to heat rooms in a building.

The heat source on the primary side can be, for example, a district heating system. Other types of heat sources are possible, like solar energy etc.

The heat exchanging devices in the branches are usually controlled by means of valves. The valves can be adjusted manually by a user of the room. In most cases the valves are actuated by thermostat heads so that the heat consumption can be adapted to actual needs and therefore the energy consumption can be kept at a low level.

The object underlying the invention is to minimize heat consumption or maximize energy efficiency.

This object is solved with a residential heating system comprising the features of claim 1, as described at the outset in that a valve arrangement having a flow control valve and a pressure regulating valve keeping constant a pressure difference over the flow control valve is located in a line between the heat exchanger and the branches.

In other words, the valve arrangement controls the combined flow of all branches, however, downstream the heat exchanger. It is therefore possible to adjust the flow supplied to all branches so that on the one hand the needs are satisfied and on the other hand the amount of heat delivered to the branches can be kept at a minimum. The control of the flow control valve itself can be rather simple since it is sufficient to adjust the opening degree of the flow control valve. The flow through the flow control valve depends on the opening degree, for example from the distance between a valve element and a valve seat, and furthermore on the pressure difference over the flow control valve. The pressure difference can be kept constant by the pressure regulating valve. Therefore, only the distance of the valve element from the valve seat has to be adjusted to regulate the desired flow. The flow control valve and the pressure regulating valve can be combined in a common unit so that it is also possible to replace the term "flow control valve" by "flow control section" and to replace the term "pressure regulating valve" by "pressure regulating section".

According to the invention the flow control valve is actuated by an actuating device controlled by a controller, wherein the controller is connected to a return temperature sensor in a return line of the branches. The controller can control the desired flow to the branches. However, in some cases, a set value which corresponds, for example, to a design flow rate, is too high so that not all heat supplied to the heat exchanging devices is used to heat the room. In this situation the temperature in the return line of all branches is too high and the flow control valve can react correspondingly by decreasing the flow rate.

According to the invention the controller is connected to a supply temperature sensor upstream the branches. Thus, it is possible to detect a ΔT, in other words the temperature difference as measured over the valve arrangement, such as in measured respectively in a supply line and a return line and thus representative of the temperature change over the branches. The ΔT measurement is then used to adjust the flow rate additionally.

According to the invention the supply temperature sensor is arranged upstream the valve arrangement. The measured temperature drop (such as over the branches and thereto connected heat exchangers) additionally is used for adjusting the flow rate.

In an embodiment of the invention the controller is connected to room temperature sensors. As mentioned above, when the heat exchanging devices, like radiators or floor heating units, are controlled by a temperature controlled valve, a temperature information of the room temperature is available. This room temperature information can be transmitted to the controller. The controller is then able to use the temperature of a room or of a plurality of rooms, or of all rooms to adjust the flow controlled by the flow control valve to the branches.

In an embodiment of the invention the room temperature sensors are part of controlling devices controlling a flow through the heat exchanger devices. As mentioned above, in many valves or other flow controlling devices there are already temperature sensitive means which are used to adjust the flow through each individual heat exchanged device.

In an embodiment of the invention a supply control valve is arranged downstream the secondary side of the heat exchanger and is connected to a temperature sensor at an inlet of the primary side of the heat exchanger. he supply control valve can therefore be used to control additionally the flow of the heat carrying fluid to the branches depending on the inlet temperature of the primary side of the heat exchanger.

Embodiments of the invention will now be described in more detail with reference to the drawing, wherein:
- Fig. 1: is a schematic representation of a first embodiment of a residential heating system,
- Fig. 2: shows a schematic illustration of the valve arrangement, and
- Fig. 3: shows a second embodiment of a residential heating system.

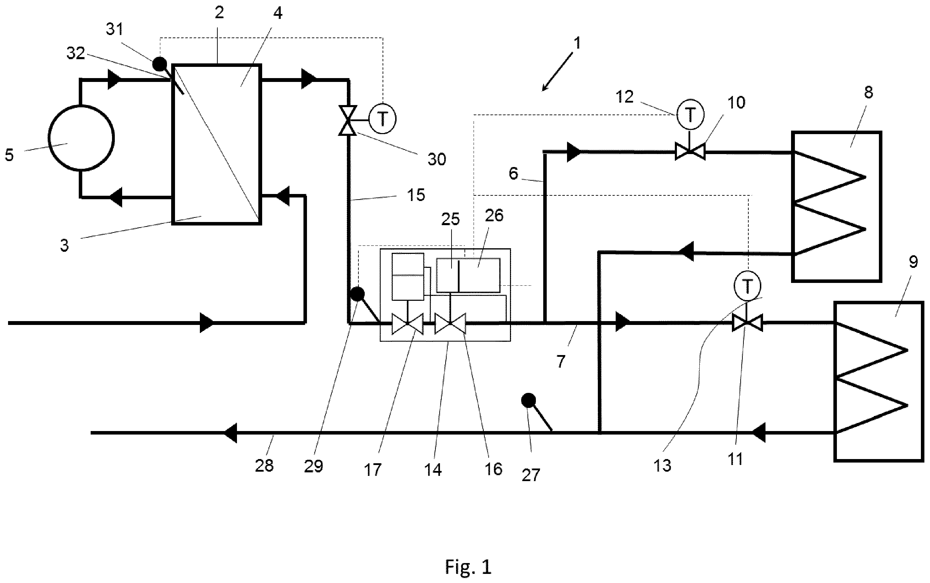

Fig.1 schematically shows a residential heating system 1. The heating system 1 comprises a heat exchanger 2 having a primary side 3 and a secondary side 4. The primary side 3 is connected to a heat source 5. The heat source can be, for example, a district heating energy system, solar energy, terrestrial heat or the like.

The secondary side 4 is connected to a heating arrangement. The heating arrangement comprises a plurality of branches 6, 7. The present heating system shows only two branches 6, 7. However, the heating system can be part of a house having a larger number of rooms. In this way there would be more than the shown two branches 6, 7.

The branch 6 comprises a heat exchange device 8 and the branch 7 comprises a heat exchange device 9. The heat exchange devices 8, 9 can be, for example, radiators, floor heating units, etc. Each heat exchange device 8, 9 is connected to a valve 10, 11. The valves 10, 11 are, for example, thermostatic controlled valves, or they are electrically controlled valves possible operating to control a temperature too in dependence on a temperature measurement. In the illustration a temperature sensor 12, 13 is shown for each valve 10, 11, however all or some of these may in alternative embodiments be separate to any valves and working purely to measure a temperature, such as in a room (see also later embodiments). In any case, the temperature sensor 12, 13 detects a temperature in a room which is heated by the heat exchange device 8, 9 and are connected to a controller 26 for data transfer regarding the respective temperatures being measured.

The illustrated valve arrangement 14 is located in a line 15 between the secondary side 4 of the heat exchanger 2 and the branches 6, 7, i.e. downstream the heat exchanger, but could alternatively be located e.g. at a return line, such as the combined return line 28 . The valve arrangement 14 comprises a flow control valve 16 and a pressure regulating valve 17. The pressure regulating valve 17 keeps substantially constant a pressure difference over two positions in the residential heating system 1, where this according to the invention is over the flow control valve 16.

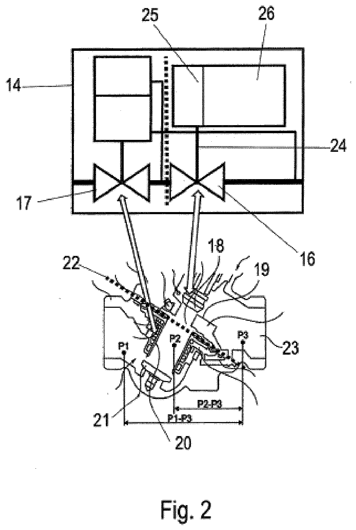

Fig. 2 schematically shows the valve arrangement 14, the flow control valve 16 and the pressure regulating valve 17 combined in a common housing. It is therefore possible to replace the term "flow control valve 16" by "flow control section" or "flow control part" and to replace the term "pressure regulating valve" by "pressure regulating section" or "pressure regulating part".

The control valve 16 comprises a valve element 18 and a valve seat 19. If a pressure difference over the gap between the valve element 18 and the valve seat 19 is constant, then the flow is determined by the distance between the valve element 18 and the valve seat 19. However, in many cases the pressure difference over the valve arrangement 14 per se is not constant. It depends, for example, from the opening degrees of the valves 10, 11 in the branches 6, 7, and on the pressure drop caused by these valves 10, 11.

To keep constant the pressure difference or pressure drop over the gap between the valve element 18 and the valve seat 19 the pressure regulating valve 17 is provided comprising a valve element 20 and a valve seat 21. The valve element 20 is actuated by a membrane 22. The membrane 22 is loaded on one side (a side facing the valve element 18) by an intermediate pressure P2 and on the opposite side (facing away from the valve element 18) by a pressure P3 at an outlet 23 of the valve arrangement 14 or another point downstream the valve arrangement 14. The intermediate pressure P2 depends on the distance between the valve element 20 and the valve seat 21 of the pressure regulating valve 17 which in turn depends on the pressure difference between P2 and P3. The basic construction of such a valve arrangement is known. The pressure regulating valve 17 keeps substantially constant a pressure difference over the flow control valve 16.

The valve element 18 of the flow control valve 16 then is connected, for example, to a valve stem 24 which is connected to an actuating device 25. The actuating device 25 is controlled by a controller 26. The controller 26 can be part of the actuating device 25 or it can be connected to the actuating device 25.

The controller 26 can receive, for example, a set value for the desired total flow through all branches 6, 7.

However, as shown in Fig. 1, the controller 26 is connected to a return temperature sensor 27 in a return line 28 of all branches 6, 7. The controller 26 therefore is able to control the total flow through all branches 6, 7 such that a temperature in the return line 28 does not exceed a given value.

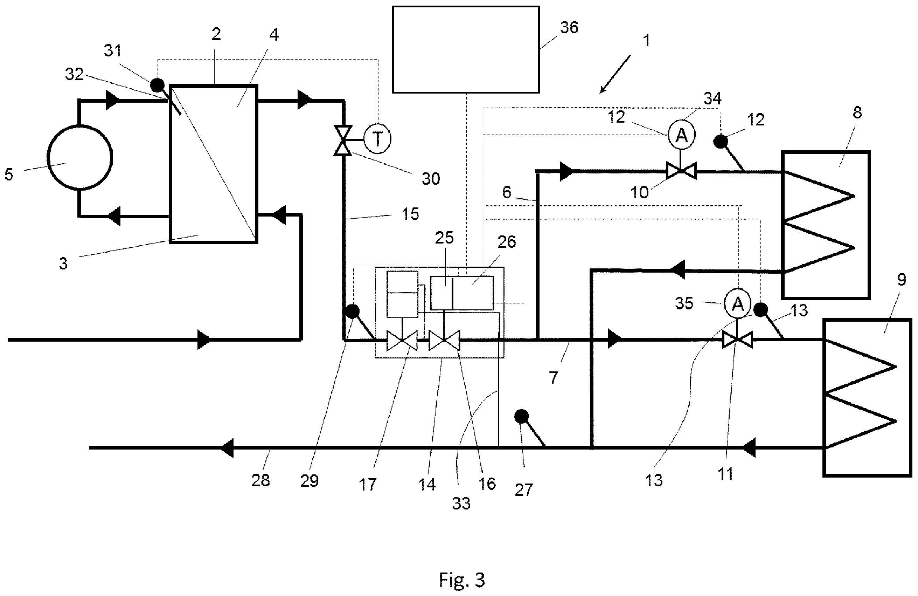

Furthermore, the controller 26 is connected to a supply temperature sensor 29 upstream the branches 6, 7 and upstream the valve arrangement 14. Together with the supply temperature sensor 29 the return temperature sensor 27 can detect a temperature difference ΔT over the branches 6, 7. The valve arrangement 14 is therefore able to adjust the general flow in the heating arrangement in response to the required temperature difference ΔT. Fig. 3 shows a slightly different embodiment of the same concept, but where the pressure regulating valve 17 keeps a substantially constant a pressure difference over two positions in the residential heating system 1, where this according to the illustrated embodiment is connected to a different position by a pressure communicating connection 33, e.g. an impulse tube, capillary tube etc.. In the illustrated embodiment the connection is to return line 28, however it might be at any of the lines. In addition both pressure connections could be connected to different positions at the residential heating system 1, such as by pressure communicating connection 33, e.g. impulse tubes, capillary tubes etc. Otherwise the shown embodiment works In the same manner as the embodiment of figs. 1 and 2, only to keep constant the pressure difference or pressure drop over the two positions in the residential heating system 1.

Fig. 3 shows a second embodiment of the residential heating system 1. Same elements are designated with the same reference numerals.

The heating system shown in Fig. 3 differs from the heating system shown in Fig. 1 in that the controller 26 additionally is connected to the temperature sensors 12, 13 in the branches 6, 7, where these does not form part of thermostatic valves- The valves 10, 11 may be regulated by actuators 35, 36 optionally also in connection to the controller 26..

The controller can therefore use not only the return temperature alone or the ΔT as an information of the exchanged energy to optimize the flow rate.

Further it can use the information about the actual measured temperature (e.g. room temperature) to optimize the flow through the heating system with as little energy as possible, but still delivering the required energy. The heating system may be self-learning and can optimize the energy consumption in reaction to what appears in connection with the heat exchange devices.

The temperature measurement can be used in several ways.

Design flow is calculated or determined in other ways which design flow is associated to certain heating conditions.

The design flow is the combined flow running through all branches 6, 7.

When at partially loads less than design flow is needed, some valves 10, 11 of heat exchange devices 8, 9 get closed due to a change in the heat demand (such as a lower or even no heat demand), others would get too much flow resulting in too high return temperature. This is picked up by the return temperature sensor 27 in the return line 28. The combined flow then will be corrected down and a dynamic balancing for partially load is achieved.

When design flow is based on design heat demand calculation, flow is calculated based on a selected temperature difference ΔT. Real heat demand is typically lower due to several safety factors included in the heat demand calculation. The result is that the actual return temperature is higher than expected. Additional return temperature control of ΔT balancing with the same effect can therefore optimize the system reaching the desired return temperature automatically. This is true at all loads. This means that the heating system 1 suddenly can correct to the system requirements being if the controller 26 by adjusting the flow in relation to design flow in response to the measured ΔT.

Often the supplied temperature will fall with an increase in the ambient temperature, such as the outside temperature relative to a building, and in an embodiment at the same time the expected return temperature, or set-point return temperature in the return line 28 will decrease too, though not necessarily with the same amount, thus the control in this embodiment may be controlled to ΔT that decreases for decreasing supply temperature, and/or ambient temperature.

In the embodiment shown in Fig. 3 the system can be continuously optimized. The temperature sensors 12, 13 measures the local temperatures, such as in a room, and communicates this to the controller 26. In this embodiment the temperature sensors 12, 13 does not communicated directly with flow regulating valves 10, 11 (which in some embodiments may not be present at all) and does thus not form part of thermostats, but operates to measure the temperatures as input to the controller 26.. If not corrected, then the flow water temperature would be adjusted according to the most critical room in the building which means that other rooms would get too high capacity, i.e. too high flow and/or too high flow water temperature. By controlling the return temperature, control of every of the branches 6, 7 would be optimized dynamically in that the flow would be corrected down if the return temperature or the temperature difference ΔT are too high. If they are too low, the flow would be corrected upwardly. The (room) temperature measurements from sensors 12, 13 would be used by the controller 26 to monitor that each of the areas (rooms) being heated would receive sufficient heating energy, such as by monitoring the temperatures to be according to a set temperatures.

However, when the individual branch 6, 7 includes a temperature assembly and a temperature measurement on the actual measured (room) temperature this can be communicated to the controller 26 too and taken into account to ensure that each branch 6, 7 will get sufficient flow.

The heating system shown in Fig. 1 and 3 therefore combine low temperature with optimal comfort reached by a high efficiency.

In the illustrated embodiment, a supply control valve 30 may be arranged in the line 15 downstream the secondary side 4 of the heat exchanger 2. The supply control valve 30 is connected to a temperature sensor 31 at an inlet 32 of the primary side 3 of the heat exchanger 2. It is therefore possible to use additionally the temperature information at the inlet 32 of the primary side 3 of the heat exchanger 2 to control the flow to the branches 6, 7.

In the illustrations two branches 6, 7 is seen, however this could be any number. One such valve arrangement 14 could control any plural of branches 6, 7, and in even further embodiments any parallel sets of heating systems 1 connected to the same heat source and either sharing or each having its own local heat exchanger 2. In this parallel embodiment each of the parallel heating systems 1 then may have their own valve arrangement 14, or in a special embodiment, one single such valve arrangement 14 is arranged upstream of each of parallel heating systems 1 servicing them all.

Fig. 3 further illustrate that an external controller 36 may be connected to some or all of the devices, such as actuators 34, 35, temperature sensors 12, 13, 27, 29, controllers 26 etc. This may be the case for any of the embodiments as illustrated, but especially for any of the embodiments with parallel heating systems 1. The external controller 36 then may supervise the combined system, such as setting a design flow e.g. according to the most critical of the heat exchange devices 8, 9 of all the branches 6, 7 of all the parallel connected heating systems 1. Then the valve arrangement(s) 14 (one combined for all and/or one connected to each of the parallel heating systems 1) correct the flow according to the measured ΔT according to the embodiments described above.

The present invention is not limited to the illustrated embodiments, but an person skilled in the art would find it obvious to combine elements from each, such as the embodiment from fig. 1 showing temperature sensors 12, 13 as in fig. 3 not being part of thermostats.

## Claims

1. Heating system (1) comprising a heating arrangement and a heat exchanger (2) having a primary side (3) and a secondary side (4), wherein the primary side (3) is to be connected to a heat source and the secondary side (4) is connected to the heating arrangement, the heating arrangement comprising plural branches (6, 7), each branch (6, 7) having a heat exchanging device (8, 9), where the heating system (1) further comprises a return temperature sensor (27) in a return line of the branches (6, 7) and a supply temperature sensor (29) upstream the branches (6, 7), and a valve arrangement (14) arranged downstream of said heat exchanger (2) in a line (15) between the heat exchanger (2) and the branches (6, 7), said valve arrangement (14) comprising a controller (26), a flow control valve (16) and a pressure regulating valve (17) keeping constant a pressure difference over two positions in the heating system (1) over the flow control valve (16), where the flow control valve (16) is actuated by an actuating device (25) controlled by said controller (26), wherein the controller (26) is connected to the return temperature sensor (27) in the return line of the branches (6, 7), and to the supply temperature sensor (29) upstream the branches (6, 7) and upstream the valve arrangement (14), **characterized in that**, the controller (26) is configured to adjust the general flow in the heating arrangement in response to a required temperature difference ΔT of the measured return temperature and supply temperature.

2. Heating system according to any of claims 1, **characterized in that** the heating system (1) further comprises room temperature sensors (12, 13) being connected to said controller (26).

3. Heating system according to claim 2, **characterized in that** the heating system further comprises controlling devices (10, 11) and the room temperature sensors (12, 13) are part of said controlling devices (10, 11) which are configured for controlling the flow through said heat exchange devices (8, 9), where said temperature sensors (12, 13) are adapted to communicate measurements to said controller (26).

4. Heating system according to any of claims 1 to 3, **characterized in that** the heating system (1) further comprises a supply control valve (30) arranged downstream the secondary side (4) of the heat exchanger (2) and a temperature sensor (31) positioned at an inlet (32) of the primary side (3) of the heat exchanger (2) and connected to said supply control valve (30).

5. Heating system according to any of the claims 2 to 4, **characterized in that** the pressure regulating valve (17) is configured to operate independent of the controller (26), but where the controller (26) is adapted to correct the flow control valve (16) in dependence on the measurements from the return temperature sensor (27) and/or the supply temperature sensor (29).

6. Heating system according to claim 5, **characterized in that** the pressure regulating valve (17) is configured to operate independent of the controller (26), but where the controller (26) is adapted to correct the flow control valve (16) in dependence on the temperature difference of the measurements from the return temperature sensor (27) and the supply temperature sensor (29)

7. Method of operating a heating system (1) comprising a heating arrangement and a heat exchanger (2) having a primary side (3) and a secondary side (4), wherein the primary side (3) is to be connected to a heat source and the secondary side (4) is connected to the heating arrangement, the heating arrangement comprising plural branches (6, 7), each branch (6, 7) having a heat exchanging device (8, 9), where the heating system (1) further comprises a return temperature sensor (27) in a return line of the branches (6, 7) and a supply temperature sensor (29) upstream the branches (6, 7), and a valve arrangement (14) arranged downstream of said heat exchanger (2) in a line (15) between the heat exchanger (2) and the branches (6, 7), said valve arrangement (14) comprising a controller (26), a flow control valve (16) and a pressure regulating valve (17) keeping constant a pressure difference over two positions in the heating system (1) over the flow control valve (16), where the flow control valve (16) is actuated by an actuating device (25) controlled by a controller (26), wherein the controller (26) is connected to the return temperature sensor (27) in the return line of the branches (6, 7), and to the supply temperature sensor (29) upstream the branches (6, 7) and upstream the valve arrangement (14), **characterized in that**, said method being for the controller (26) to correct the flow in dependence of a temperature measurement by adjusting the general flow in the heating arrangement in response to a required temperature difference ΔT of the measured return temperature and supply temperature.

## Patentansprüche

1. Heizsystem (1), umfassend eine Heizanordnung und einen Wärmetauscher (2), der eine Primärseite (3) und eine Sekundärseite (4) aufweist, wobei die Primärseite (3) mit einer Wärmequelle zu verbinden ist und die Sekundärseite (4) mit der Heizanordnung verbunden ist, wobei die Heizanordnung mehrere Zweige (6, 7) umfasst, wobei jeder Zweig (6, 7) eine Wärmeaustauschvorrichtung (8, 9) umfasst, wobei das Heizsystem (1) ferner einen Rücklauftemperatursensor (27) in einer Rücklaufleitung der Zweige (6, 7) und einen Zulauftemperatursensor (29) in Strömungsrichtung vor den Zweigen (6, 7) umfasst, und
eine Ventilanordnung (14), die in Strömungsrichtung nach dem Wärmetauscher (2) in einer Leitung (15) zwischen dem Wärmetauscher (2) und den Zweigen (6, 7) angeordnet ist, wobei die Ventilanordnung (14) eine Steuereinheit (26), ein Durchflusssteuerventil (16) und ein Druckregelventil (17) umfasst, die über das Durchflusssteuerventil (16) einen Druckunterschied über zwei Positionen im Heizsystem (1) hinweg konstant halten, wobei das Durchflusssteuerventil (16) durch eine Betätigungsvorrichtung (25) betätigt wird, die durch die Steuereinheit (26) gesteuert wird, wobei die Steuereinheit (26) mit dem Rücklauftemperatursensor (27) in der Rücklaufleitung der Zweige (6, 7) verbunden ist und mit dem Zulauftemperatursensor (29) in Strömungsrichtung vor den Zweigen (6, 7) und in Strömungsrichtung vor der Ventilanordnung (14) verbunden ist, **dadurch gekennzeichnet, dass** die Steuereinheit (26) eingerichtet ist, um den allgemeinen Durchfluss in der Heizanordnung als Reaktion auf einen erforderlichen Temperaturunterschied ΔT der gemessenen Rücklauftemperatur und Zulauftemperatur anzupassen.

2. Heizsystem nach einem der Ansprüche 1, **dadurch gekennzeichnet, dass** das Heizsystem (1) ferner Raumtemperatursensoren (12, 13) umfasst, die mit der Steuereinheit (26) verbunden sind.

3. Heizsystem nach Anspruch 2, **dadurch gekennzeichnet, dass** das Heizsystem ferner Steuervorrichtungen (10, 11) umfasst und die Raumtemperatursensoren (12, 13) Teil der Steuervorrichtungen (10, 11) sind, die zum Steuern des Durchflusses durch die Wärmeaustauschvorrichtungen (8, 9) eingerichtet sind, wobei die Temperatursensoren (12, 13) ausgelegt sind, um Messwerte zur Steuereinheit (26) zu übertragen.

4. Heizsystem nach einem der Ansprüche 1 bis 3, **dadurch gekennzeichnet, dass** das Heizsystem (1) ferner ein Zulaufsteuerventil (30) umfasst, das in Strömungsrichtung nach der Sekundärseite (4) des Wärmetauschers (2) angeordnet ist, und einen Temperatursensor (31), der an einem Einlass (32) der Primärseite (3) des Wärmetauschers (2) positioniert und mit dem Zulaufsteuerventil (30) verbunden ist.

5. Heizsystem nach einem der Ansprüche 2 bis 4, **dadurch gekennzeichnet, dass** das Druckregelventil (17) eingerichtet ist, um unabhängig von der Steuereinheit (26) zu arbeiten, wobei die Steuereinheit (26) jedoch ausgelegt ist, um das Durchflusssteuerventil (16) in Abhängigkeit von den Messwerten vom Rücklauftemperatursensor (27) und/oder vom Zulauftemperatursensor (29) zu korrigieren.

6. Heizsystem nach Anspruch 5, **dadurch gekennzeichnet, dass** das Druckregelventil (17) eingerichtet ist, um unabhängig von der Steuereinheit (26) zu arbeiten, wobei die Steuereinheit (26) jedoch ausgelegt ist, um das Durchflusssteuerventil (16) in Abhängigkeit vom Temperaturunterschied der Messwerte vom Rücklauftemperatursensor (27) und vom Zulauftemperatursensor (29) zu korrigieren.

7. Verfahren zum Betreiben eines Heizsystems (1), umfassend eine Heizanordnung und einen Wärmetauscher (2), der eine Primärseite (3) und eine Sekundärseite (4) aufweist, wobei die Primärseite (3) mit einer Wärmequelle zu verbinden ist und die Sekundärseite (4) mit der Heizanordnung verbunden ist, wobei die Heizanordnung mehrere Zweige (6, 7) umfasst, wobei jeder Zweig (6, 7) eine Wärmeaustauschvorrichtung (8, 9) umfasst, wobei das Heizsystem (1) ferner einen Rücklauftemperatursensor (27) in einer Rücklaufleitung der Zweige (6, 7) und einen Zulauftemperatursensor (29) in Strömungsrichtung vor den Zweigen (6, 7) umfasst, und
eine Ventilanordnung (14), die in Strömungsrichtung nach dem Wärmetauscher (2) in einer Leitung (15) zwischen dem Wärmetauscher (2) und den Zweigen (6, 7) angeordnet ist, wobei die Ventilanordnung (14) eine Steuereinheit (26), ein Durchflusssteuerventil (16) und ein Druckregelventil (17) umfasst, die über das Durchflusssteuerventil (16) einen Druckunterschied über zwei Positionen im Heizsystem (1) hinweg konstant halten, wobei das Durchflusssteuerventil (16) durch eine Betätigungsvorrichtung (25) betätigt wird, die durch eine Steuereinheit (26) gesteuert wird, wobei die Steuereinheit (26) mit dem Rücklauftemperatursensor (27) in der Rücklaufleitung der Zweige (6, 7) verbunden ist und mit dem Zulauftemperatursensor (29) in Strömungsrichtung vor den Zweigen (6, 7) und in Strömungsrichtung vor der Ventilanordnung (14) verbunden ist, **dadurch gekennzeichnet, dass** das Verfahren dazu gedacht ist, dass die Steuereinheit (26) den Durchfluss in Abhängigkeit von einem Temperaturmesswert korrigiert, indem der allgemeine Durchfluss in der Heizanordnung als Reaktion auf einen erforderlichen Temperaturunterschied ΔT der gemessenen Rücklauftemperatur und Zulauftemperatur angepasst wird.

## Revendications

1. Système de chauffage (1) comprenant un agencement de chauffage et un échangeur de chaleur (2) ayant un côté primaire (3) et un côté secondaire (4), le côté primaire (3) devant être connecté à une source de chaleur et le côté secondaire (4) étant connecté à l'agencement de chauffage, l'agencement de chauffage comprenant plusieurs branches (6, 7), chaque branche (6, 7) ayant un dispositif d'échange de chaleur (8, 9), le système de chauffage (1) comprenant en outre un capteur de température de retour (27) dans une ligne de retour des branches (6, 7) et un capteur de température d'alimentation (29) en amont des branches (6, 7), et
un agencement de soupapes (14) agencé en aval dudit échangeur de chaleur (2) dans une conduite (15) entre l'échangeur de chaleur (2) et les branches (6, 7), ledit agencement de soupapes (14) comprenant un dispositif de commande (26), une soupape de commande de débit (16) et une soupape de régulation de pression (17) maintenant constante une différence de pression sur deux positions dans le système de chauffage (1) sur la soupape de commande de débit (16), la soupape de commande de débit (16) étant actionnée par un dispositif d'actionnement (25) commandé par ledit dispositif de commande (26), le dispositif de commande (26) étant connecté au capteur de température de retour (27) dans la conduite de retour des branches (6, 7), et au capteur de température d'alimentation (29) en amont des branches (6, 7) et en amont de l'agencement de soupapes (14), **caractérisé en ce que** le dispositif de commande (26) est configuré pour ajuster le débit général dans l'agencement de chauffage en réponse à une différence de température requise ΔT des température de retour et température d'alimentation mesurées.

2. Système de chauffage selon la revendication 1, **caractérisé en ce que** le système de chauffage (1) comprend en outre des capteurs de température ambiante (12, 13) qui sont connectés audit dispositif de commande (26).

3. Système de chauffage selon la revendication 2, **caractérisé en ce que** le système de chauffage comprend en outre des dispositifs de commande (10, 11) et les capteurs de température ambiante (12, 13) font partie desdits dispositifs de commande (10, 11) qui sont configurés pour commander le flux à travers lesdits dispositifs d'échange de chaleur (8, 9), lesdits capteurs de température (12, 13) étant adaptés pour communiquer des mesures audit dispositif de commande (26).

4. Système de chauffage selon l'une quelconque des revendications 1 à 3, **caractérisé en ce que** le système de chauffage (1) comprend en outre une soupape de commande d'alimentation (30) agencée en aval du côté secondaire (4) de l'échangeur de chaleur (2) et un capteur de température (31) positionné à une entrée (32) du côté primaire (3) de l'échangeur de chaleur (2) et connecté à ladite soupape de commande d'alimentation (30).

5. Système de chauffage selon l'une quelconque des revendications 2 à 4, **caractérisé en ce que** la soupape de régulation de pression (17) est configurée pour fonctionner indépendamment du dispositif de commande (26), mais le dispositif de commande (26) étant adapté pour corriger la soupape de commande de débit (16) en fonction des mesures du capteur de température de retour (27) et/ou du capteur de température d'alimentation (29) .

6. Système de chauffage selon la revendication 5, **caractérisé en ce que** la soupape de régulation de pression (17) est configurée pour fonctionner indépendamment du dispositif de commande (26), mais le dispositif de commande (26) étant adapté pour corriger la soupape de commande de débit (16) en fonction de la différence de température des mesures du capteur de température de retour (27) et du capteur de température d'alimentation (29).

7. Procédé de fonctionnement d'un système de chauffage (1) comprenant un agencement de chauffage et un échangeur de chaleur (2) ayant un côté primaire (3) et un côté secondaire (4), le côté primaire (3) devant être connecté à une source de chaleur et le côté secondaire (4) étant connecté à l'agencement de chauffage, l'agencement de chauffage comprenant plusieurs branches (6, 7), chaque branche (6, 7) ayant un dispositif d'échange de chaleur (8, 9), le système de chauffage (1) comprenant en outre, un capteur de température de retour (27) dans une ligne de retour des branches (6, 7) et un capteur de température d'alimentation (29) en amont des branches (6, 7), et
un agencement de soupapes (14) agencé en aval dudit échangeur de chaleur (2) dans une conduite (15) entre l'échangeur de chaleur (2) et les branches (6, 7), ledit agencement de soupapes (14) comprenant un dispositif de commande (26), une soupape de commande de débit (16) et une soupape de régulation de pression (17) maintenant constante une différence de pression sur deux positions dans le système de chauffage (1) sur la soupape de commande de débit (16), la soupape de commande de débit (16) étant actionnée par un dispositif d'actionnement (25) commandé par un dispositif de commande (26), le dispositif de commande (26) étant connecté au capteur de température de retour (27) dans la conduite de retour des branches (6, 7), et au capteur de température d'alimentation (29) en amont des branches (6, 7) et en amont de l'agencement de soupapes (14), **caractérisé en ce que**, ledit procédé étant pour le dispositif de commande (26) de corriger le débit en fonction d'une mesure de température en ajustant le débit général dans l'agencement de chauffage en réponse à une différence de température requise ΔT des température de retour et température d'alimentation mesurées.
